# FASCICULE DE BREVET EUROPEEN

(11) **EP 3 325 271 B1**
(45) Date de publication et mention de la délivrance du brevet: **27.02.2019**
(21) Numéro de dépôt: 16760523.7
(22) Date de dépôt: 25.07.2016
(51) Int. Cl.: B32B 18/00, C04B 37/00, F02K 1/82, F02C 7/045, G10K 11/172, C04B 35/638, C04B 35/80, B32B 3/12, G10K 11/165, G10K 11/168, B32B 5/02, B32B 9/00, B32B 9/04, B32B 15/20, B32B 37/14, B32B 3/06, B32B 3/26, B32B 15/14

(54) **PANNEAU D'ATTÉNUATION ACOUSTIQUE EN MATÉRIAU COMPOSITE CÉRAMIQUE OXYDE AVEC ÂME EN MATÉRIAU MÉTALLIQUE CONVERTI ÉLECTROCHIMIQUEMENT**
AKUSTISCHE DÄMPFUNGSPLATTE AUS KERAMISCHEM OXIDMATERIAL MIT EINEM KERN AUS EINEM ELEKTROCHEMISCH UMGEWANDELTEN METALLMATERIAL
ACOUSTIC ATTENUATION PANEL IN OXIDE CMC WITH A METALLIC CORE ELECTROCHEMICALLY CONVERTED INTO AN OXIDE

(30) Priorité: 24.07.2015 FR 1557083
(43) Date de publication de la demande: 30.05.2018
(73) Titulaire: Safran Nacelles, 76700 Gonfreville-l'Orcher (FR)
(72) Inventeur: DELEHOUZE, Arnaud, 76700 Gonfreville L'Orcher (FR); SENTIS, Sylvain, 76700 Gonfreville L'Orcher (FR); DESJOYEAUX, Bertrand, 76700 Gonfreville L'Orcher (FR)
(74) Mandataire: Gaillarde, Frédéric F. Ch.
(86) Numéro de dépôt international: PCT/FR2016/051936
(87) Numéro de publication internationale: WO 2017/017369

(56) Documents cités:
- EP-A1- 0 611 741
- WO-A1-2010/007263
- WO-A1-2014/118216
- FR-A1- 2 852 003
- US-A1- 2009 005 232
- US-A1- 2009 263 627

## Description

La présente invention concerne le domaine des panneaux d'atténuation acoustique, notamment destinés à équiper les zones chaudes d'éjection des gaz d'un turboréacteur d'aéronef. L'invention concerne plus spécifiquement un procédé de fabrication d'un panneau d'atténuation acoustique en matériau composite à matrice céramique, ainsi qu'un panneau d'atténuation acoustique obtenu avec un tel procédé, et un turboréacteur d'aéronef comportant un panneau d'atténuation acoustique selon l'invention.

Les turboréacteurs comportent des surfaces de guidage aérodynamiques de l'écoulement des gaz chauds éjectés, qui peuvent être soumises à des températures élevées pouvant dépasser 600°C, et atteindre dans certains cas 1000°C.

Pour réduire les bruits émis par le turboréacteur en fonctionnement, il est connu de réaliser des surfaces de guidage aérodynamiques avec des panneaux acoustiques métallique ou en matériau composite à matrice céramique non oxyde comportant une structure du type sandwich composée d'un matériau d'âme encapsulé entre deux peaux.

L'âme centrale comporte des parois transversales formant un grand nombre de cellules fermées, qui peuvent présenter en particulier une forme en nid d'abeille.

La peau avant tournée vers la source sonore, présente des passages de gaz formés par des micro-perforations, débouchant dans des cavités résonnantes formées par les cellules fermées de l'âme centrale, pour constituer des résonateurs de Helmholtz réalisant une atténuation des émissions acoustiques émises par le turboréacteur.
WO 2010/007263 A1 décrit un panneau acoustique pour une tuyère d'éjection et divulgue une âme centrale alvéolaire métallique sandwichée entre une peau externe comprenant des trous acoustiques et une peau interne.
US 2009/263627 A1 décrit une structure acoustique en sandwich comprenant une âme centrale alvéolaire entre deux peaux en CMC, par exemple oxyde/oxyde. Ce document divulgue la rigidification temporaire d'un absorbant acoustique grâce à une matrice organique fugitive : en d'autres termes les cavités de l'âme centrale sont rigidifiées temporairement grâce à un mélange comprenant une résine thermoplastique, ladite résine étant éliminée lors du frittage final.
WO 2014/118216 A1 décrit un panneau d'atténuation pour turbine d'avion, comportant une âme cellulaire sandwichée entre une peau pleine et une peau perforée, et divulgue une telle structure "sandwich" en CMC oxyde/oxyde, par exemple des fibres d'alumine dans une matrice d'alumine.

Les panneaux acoustiques de l'art antérieur posent différents problèmes. La masse est relativement importante. De plus il présente des limitations en température qui peuvent être atteintes, notamment dans les turboréacteurs. Il présente aussi des limitations de la durée d'exposition dans certains environnements.

Il est connu en variante de réaliser la structure sandwich en matériau composite à matrice céramique « CMC », avec une céramique qui n'est pas un oxyde. Ce matériau est à la fois résistant et léger. Toutefois il présente des limitations de la durée d'exposition dans certains environnements. De plus la fabrication d'une âme centrale et des peaux dans ce matériau est très complexe et coûteuse.

La présente invention visant notamment à pallier les inconvénients de l'art antérieur, se rapporte à cet effet à un procédé de fabrication d'un panneau d'atténuation acoustique selon la revendication 1.

Un avantage de ce procédé de fabrication est qu'en adaptant la matière ainsi que les formes du matériau fugitif, on obtient lors du frittage une protection préservant le volume interne des alvéoles, en évitant une déformation des peaux vers ce volume ainsi qu'un écoulement de la matrice dedans, qui réduiraient le volume des alvéoles en diminuant la performance acoustique des panneaux.

On assure en même temps par le remplissage avec le matériau composite des espaces sur le tour des cavités, des plus grandes surfaces d'adhésion entre les peaux et l'âme centrale augmentant fortement la tenue mécanique du panneau.

Le procédé de fabrication selon l'invention peut comporter une ou plusieurs des caractéristiques suivantes, qui peuvent être combinées entre elles.

Avantageusement, le procédé de fabrication comprend une étape supplémentaire destinée à réaliser pendant le moulage des perforations de l'une des peaux en matériau composite. On obtient de manière rapide un grand nombre de perforations.

Cette étape supplémentaire peut comporter la réalisation de pointes sur le matériau de remplissage fugitif, dans ce même matériau, traversant un renfort fibreux d'une peau.

En variante l'étape supplémentaire peut comporter la dépose sur le côté extérieur d'un renfort fibreux prévu pour une peau, d'une plaque équipée de pointes traversant ce renfort. Ces pointes sont réalisées en matériau fugitif, ou en un matériau apte à résister à l'étape de frittage, auquel cas les inserts présentent une forme démoulable.

Le procédé de fabrication peut utiliser pour réaliser les peaux des renforts fibreux secs recevant ensuite la matrice par filtration, ou des renforts fibreux pré-imprégnés d'une matrice.

Avantageusement, le matériau fugitif peut être n'importe quel matériau apte à disparaître lors de l'opération de frittage : le matériau fugitif peut comporter un ou plusieurs matériaux choisis parmi les matières thermoplastiques et thermodurcissables.

Avantageusement, la réalisation des cavités acoustiques comporte une étape d'assemblage entre elles de lamelles d'aluminium au moyen d'un écrouissage, d'un sertissage, d'une soudure ou d'un collage avec un adhésif précéramique.

L'invention a aussi pour objet un panneau d'atténuation acoustique en matériau composite céramique, réalisé avec un procédé comprenant l'une quelconque des caractéristiques précédentes.

En d'autres termes, le panneau d'atténuation acoustique de l'invention est un panneau d'atténuation acoustique comprenant une âme centrale alvéolaire composée d'oxyde d'aluminium, renfermée entre les deux peaux extérieures en matériau composite à matrice céramique.

Le fait de prévoir une âme alvéolaire composée d'oxyde d'aluminium permet au panneau d'atténuation acoustique de l'invention de résister à des températures largement supérieures à la température de fusion de l'aluminium comprise entre 500°C et 600°C, la température de fusion de l'oxyde d'aluminium étant supérieure à 2000°C. Le fait d'utiliser l'oxyde d'aluminium pour former l'âme alvéolaire du panneau d'atténuation acoustique en matériau composite à matrice céramique permet avantageusement une utilisation dudit panneau dans des zones chaudes du moteur qui peuvent être soumises à des températures pouvant être comprises entre 600°C et 2000° C.

L'aluminium des parois des cavités acoustiques est totalement converti en oxyde d'aluminium.

Avantageusement, le raccordement du matériau composite céramique des peaux avec les parois de l'âme centrale, forme sensiblement un rayon de raccordement. La forme d'un rayon donne avec peu de matière une résistance élevée.

Avantageusement, les deux peaux comprennent un renfort fibreux en oxyde métallique et une matrice en oxyde métallique.

En particulier, la matrice et le renfort fibreux des peaux peut comprendre au moins deux matériaux céramiques différents. On adapte ainsi les caractéristiques locales de la matrice suivant les contraintes.

Selon un mode de réalisation, l'âme centrale comporte des passages de drainage entre des cavités.

L'âme centrale peut comporter sur ses côtés des créneaux d'accrochage sur les peaux.

L'invention a de plus pour objet un ensemble propulsif d'aéronef (c'est-à dire l'ensemble formé par un turboréacteur équipé de sa nacelle, cet ensemble pouvant inclure le mât moteur), l'ensemble propulsif comportant un ou plusieurs panneaux d'atténuation acoustique comprenant l'une quelconque des caractéristiques définies ci-dessus.

L'invention sera mieux comprise et d'autres caractéristiques et avantages apparaîtront plus clairement à la lecture de la description ci-après donnée à titre d'exemple, en référence aux dessins annexés dans lesquels :
- la figure 1 est une vue d'ensemble d'un panneau acoustique en matériau composite selon l'invention ;
- la figure 2 est une vue de dessus des parois des cavités acoustiques de ce panneau, comprenant une structure en forme de nid d'abeille ;
- les figures 2a et 2b sont des vues de détail présentant deux modes de fabrication de cette structure ;
- les figures 3, 4 et 5 présentent des variantes de ces parois ;
- la figure 6 est une vue de face présentant un procédé de réalisation de ce panneau ;
- la figure 7 est une vue de détail de la liaison entre une peau et une cloison ;
- la figure 8 présente un assemblage mécanique de ce panneau ;
- la figure 9 présente un premier procédé de perforation de la peau supérieure ; et
- la figure 10 présente un deuxième procédé de perforation de la peau supérieure.

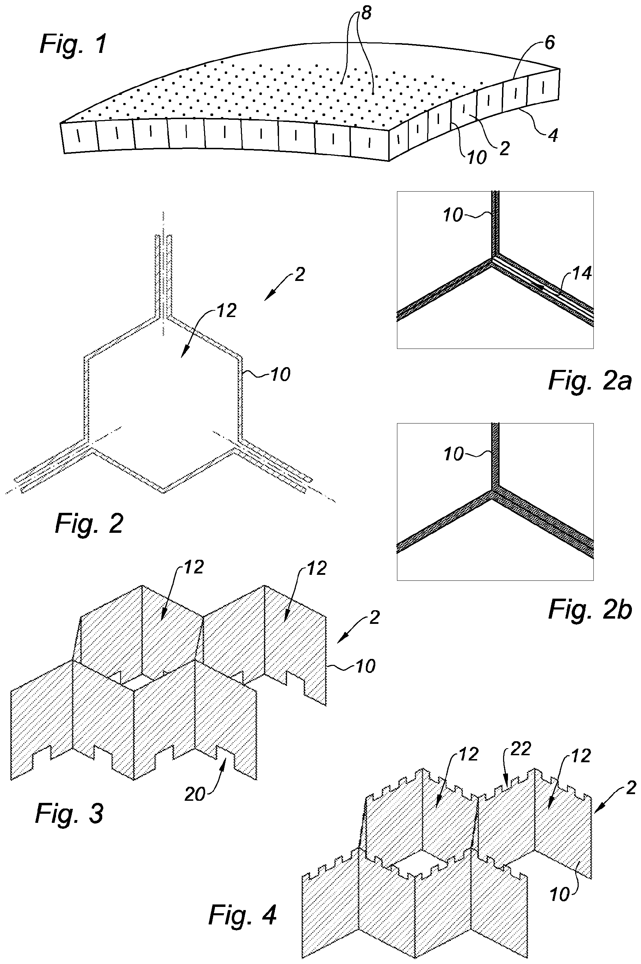

La figure 1 présente un panneau acoustique comportant une âme centrale 2 d'épaisseur constante ou variable, comportant des parois disposées transversalement 10 délimitant un grand nombre de cavités acoustiques juxtaposées.

Le panneau acoustique reçoit d'un côté appelé par convention côté arrière une peau arrière étanche 4, et du côté avant prévu pour être tourné vers la source sonore, une peau avant 6 présentant un grand nombre de petites perforations 8 débouchant en principe dans toutes les cavités acoustiques.

Les peaux 4, 6 sont réalisées en matériau composite à matrice céramique « CMC », comportant des fibres en matériau céramique intégrées dans une matrice réalisée aussi en matériau céramique. Les fibres peuvent être des fibres longues ou courtes. Pour les fibres et la matrice on peut utiliser en particulier des oxydes métalliques.

La figure 2 présente les parois 10 disposées transversalement dans le panneau, constituant des cavités résonnantes hexagonales 12 disposées suivant une forme en nid d'abeille. En variante les cavités peuvent présenter d'autres formes.

Les parois 10 des cavités 12 sont formées dans un métal converti par un procédé électrochimique en céramique, présentant un point de fusion élevé. Pour cela on utilise de l'aluminium qui est converti en oxyde d'aluminium ou alumine, afin d'obtenir une structure présentant une résistance compatible avec le procédé de réalisation du panneau sandwich, en particulier la température pour le frittage des peaux à matrice céramique. On notera que la température de fusion de l'oxyde d'aluminium est supérieure à 2000°C.

De plus la structure doit résister aux différentes contraintes physico-chimiques dans les applications visées, en particulier dans le cas des surfaces de guidage aérodynamiques pour l'écoulement des gaz chauds des turboréacteurs.

Le procédé de fabrication de la structure de l'âme centrale 2 est le suivant.

On assemble des lamelles d'aluminium entre elles par différents procédés comme un écrouissage, un sertissage, une soudure par friction, ou un collage avec un adhésif précéramique. La mise en forme du matériau d'âme à la forme de la pièce est réalisée soit préalablement à cet assemblage soit consécutivement.

On réalise ensuite le traitement électrochimique de la structure, ce qui donne une conversion en oxyde d'aluminium présentant un gonflement du volume.

On obtient après une conversion partielle des lamelles d'aluminium en alumine, comme présenté figure 2a, une couche d'aluminium résiduel 14 qui n'a pas été convertie en oxyde d'aluminium

On obtient aussi comme présenté figure 2b, après une conversion totale des lamelles d'aluminium en alumine, une continuité de la couche d'alumine à l'endroit des jonctions d'assemblage des lamelles d'aluminium garantissant la tenue mécanique du matériau d'âme.

La forme et les dimensions des cavités résonnantes 12 peuvent être variées, notamment en largeur et en hauteur. On peut disposer un contour différent de la forme hexagonale. On peut aussi varier les caractéristiques des cavités résonnantes sur un même panneau, selon les endroits. Ces différentes caractéristiques sont adaptées pour répondre en particulier à chaque endroit aux besoins d'atténuation acoustique et à la résistance mécanique recherchée.

La figure 3 présente une variante des parois 10 des cavités 12, comportant à la base de chaque face des parois une découpe rectangulaire dans cet exemple, formant un passage de drainage 20 entre deux cavités.

Le passage de drainage 20 comporte une hauteur suffisante pour conserver un passage entre les cavités 12 une fois la peau assemblée sur ces parois 10, de manière à pouvoir drainer un liquide entrant dans ces cavités en cours lorsque le panneau est utilisé. En variante les trous de drainage peuvent présenter d'autres formes.

En variante, lorsque la matrice céramique est infiltrée, ces trous sont préalablement comblés par l'insertion de matériau de remplissage fugitif. Ces volumes de matériau de remplissage fugitif pouvant être intégré à ceux servant au comblement des volumes laissés libres par les cavités du matériau d'âme.

La figure 4 présente une variante des parois 10 des cavités 12, comportant au sommet de chaque face des parois une série de petites découpes rectangulaires dans cet exemple, formant des créneaux 22, destinées à assurer une pénétration dans la peau disposée en face, pour obtenir un meilleur ancrage mécanique de cette peau sur l'âme centrale 2.

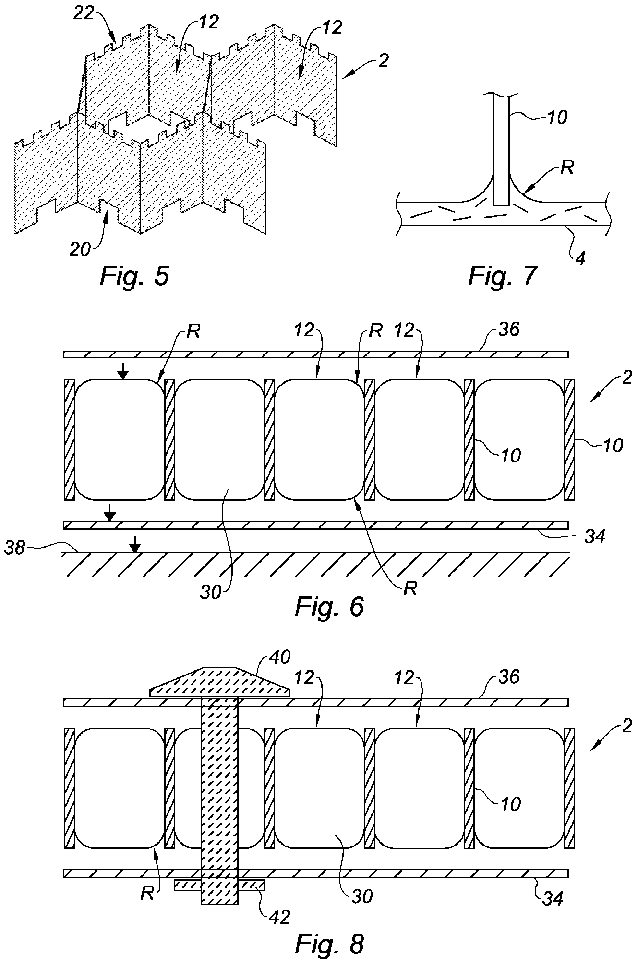

La figure 5 présente une âme centrale 2 combinant les deux variantes précédentes, comportant en dessous les passages de drainage 20 et au-dessus les créneaux 22.

En complément on peut réaliser toutes combinaisons de ces variantes, comportant par exemple des créneaux 22 sur les deux côtés de l'âme centrale 2.

La figure 6 présente un procédé de fabrication des panneaux acoustiques, par filtration de la matrice dans les fibres.

On dépose dans un moule 38 un premier renfort de fibres céramiques sèches 34.

On dépose ensuite l'âme centrale 2, qui a reçu au préalable dans chaque cavité 12 un matériau de remplissage fugitif 30 remplissant tout le volume d'un côté à l'autre et le cas échéant les trous de drainage. En variante on peut remplir les cavités 12 après ce dépôt de l'âme centrale 2.

Le matériau de remplissage 30 de chaque cavité 12 comporte sur chaque côté un rayon de raccordement R faisant le contour de la cavité, raccordant les faces horizontales avec les faces verticales de ce matériau. Le rayon de raccordement R forme l'équivalent d'un ménisque convexe de chaque côté du matériau de remplissage 30.

De cette manière il reste pour chaque côté de la cavité 12 un petit espace faisant son contour, entre les parois 10 et le plan horizontal recevant une peau 4, 6.

On dépose enfin le deuxième renfort de fibres céramiques sèches 36, puis on met en place un moyen de pressage supérieur pour serrer l'empilage sur l'âme centrale 2.

On réalise ensuite une filtration de la matrice céramique dans les deux renforts de fibres 34, 36, par le matériau céramique en poudre formant une barbotine portée par un fluide vecteur de l'apport des poudres, puis un séchage pour éliminer ce fluide, ou une polymérisation dans le cas où la matrice céramique finale est apportée par une résine précéramique. On choisit en particulier un fluide compatible avec le matériau de remplissage fugitif 30, pour ne pas se mélanger ou le dissoudre.

En particulier, la matrice et le renfort fibreux des peaux peut comprendre au moins deux matériaux céramiques différents pour adapter les caractéristiques locales de cette matrice suivant les contraintes.

On réalise enfin un frittage en température de la matrice pour effectuer une agrégation de l'ensemble de la matrice et des fibres, et réaliser l'assemblage avec l'âme centrale 2.

On choisit le matériau de remplissage fugitif 30 pour obtenir son élimination, au moins partielle et de préférence totale, lors de l'opération de frittage en température, notamment par combustion, fusion, oxydation, sublimation, évaporation. En particulier le matériau fugitif peut être n'importe quel matériau apte à disparaître lors de l'opération de frittage : on peut utiliser notamment un ou plusieurs matériaux choisis parmi les matières plastiques thermoplastiques (telles que le polyéthylène), les matières plastiques thermodurcissables (par exemple à base d'époxy), ou les métaux à bas point de fusion (par exemple à base d'aluminium, de plomb ou d'étain).

Les peaux sont choisies pour permettre pendant cette opération un passage vers l'extérieur du matériau de remplissage 30, afin de le laisser s'échapper.

Le matériau de remplissage fugitif 30 évite un effondrement des peaux extérieures dans les cavités 12 dans le cas de renforts fibreux pré-imprégnés. Dans le cas d'une filtration, il évite en plus le remplissage des cavités 12 par la matrice.

On notera que grâce au pressage supérieur de l'empilage sur l'âme centrale 2, on obtient un remplissage par la matrice de tous les volumes disponibles, en particulier des espaces laissés libres par les rayons de raccordement R sur le tour de chaque cavité 12.

La figure 7 présente la matrice de la peau 4 venant alors pour chaque côté du panneau, recouvrir sur une petite hauteur les extrémités de chaque face des parois 10 avec un rayon R identique à celui du matériau de remplissage fugitif 30, ce qui forme une grande surface de contact entre cette matrice et l'âme centrale 2. On obtient une très forte adhérence entre les peaux 4, 6, et cette âme centrale 2.

En variante on peut utiliser un procédé de fabrication des panneaux acoustiques en utilisant pour réaliser les peaux 4, 6 des renforts fibreux pré-imprégnés.

On dépose alors dans le moule 38 le premier renfort pré-imprégné 34, puis l'âme centrale 2 contenant le matériau de remplissage 30, ou recevant ce matériau après, et enfin le deuxième renfort pré-imprégné 36. L'opération de frittage reste similaire, avec une fonction équivalente pour le matériau de remplissage, évitant un enfoncement local des peaux dans les cavités 12, et assurant une surface de contact importante avec les parois 10 grâce aux espaces laissés libres par les rayons de raccordement R.

On peut en complément déposer entre les renforts fibreux 34, 36 et l'âme centrale 2, une couche mince d'adhésif en précéramique qui améliore la liaison.

En variante on peut utiliser un procédé de fabrication des panneaux acoustiques en utilisant des peaux consolidées ou déjà frittées, qui sont collées sur l'âme centrale 2 par une enduction de colle précéramique intermédiaire qui est polymérisée ensuite.

Pour ce procédé le matériau de remplissage provisoire 30 remplit le même rôle, en évitant un remplissage des cavités 12 par la colle, et en formant une surface de contact importante avec les parois 10 grâce aux espaces laissés libres par les rayons de raccordement R de ce matériau.

La figure 8 présente en complément un assemblage mécanique, par une vis 40 disposant d'une tête large, qui serre l'empilage des composants du panneau grâce à un écrou 42 disposé en dessous, prenant appui sur une grande surface.

On peut en particulier réaliser un renforcement de l'âme centrale 2 au niveau de la vis de serrage 40, par un remplissage, pour éviter un écrasement du panneau à cet endroit. On peut en variante utiliser tout autre moyen de serrage.

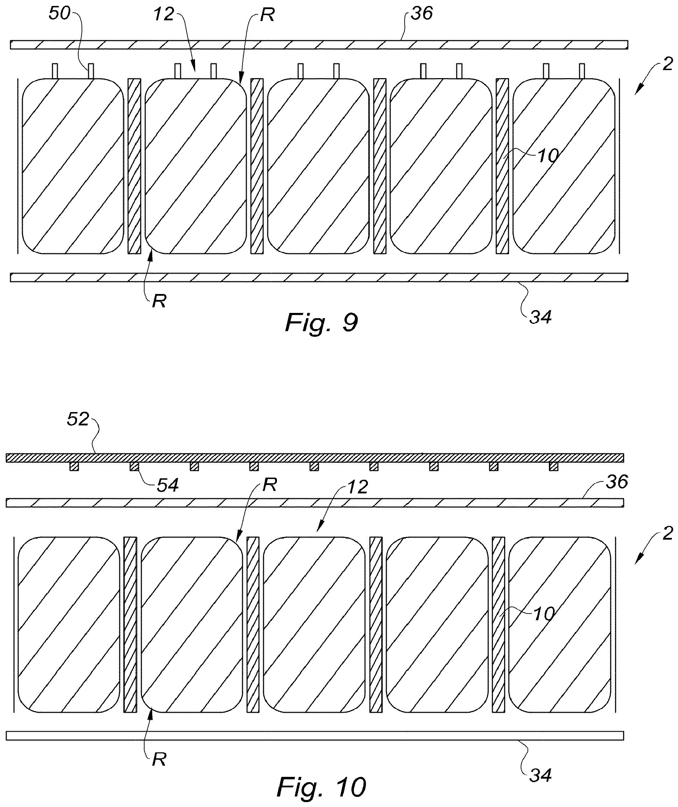

La figure 9 présente un premier procédé de réalisation des perforations sur la peau supérieure 36 lors de la fabrication du panneau.

On dispose sur le dessus du matériau de remplissage 30 dans chaque cavité 12, des pointes tournées vers le haut 50, formées dans un matériau s'éliminant lors du frittage du matériau céramique. Lors de la dépose du renfort fibreux supérieur 36, qui peut être pré-imprégné par la matrice céramique, ou recevoir ensuite cette matrice par filtration, les pointes 50 percent ce renfort et le traversent complètement.

Après l'opération de frittage, les pointes 50 disparaissent en laissant dans la peau supérieure des perforations équivalentes.

La figure 10 présente un deuxième procédé de réalisation des perforations sur la peau supérieure 36.

Après avoir complété l'empilage des deux renforts fibreux 34, 36 et de l'âme centrale 2, on dispose sur le renfort supérieur une plaque 52 comportant une série de pointes 54 tournées vers le bas, traversant complètement ce renfort.

Après l'opération de frittage de la matrice céramique des peaux, on retire la plaque 52, ses pointes 54 laissant des perforations équivalentes dans la peau supérieure. On peut aussi disposer sur la plaque 52 des pointes 54 réalisées dans un matériau disparaissant lors de l'opération de frittage.

Pour ces procédés de réalisation des perforations, la hauteur des pointes 50, 54 peut être ajustée sur l'épaisseur du renfort fibreux 36 à traverser.

En variante la longueur des pointes 50, 54 peut être plus importante avec un dépassement de l'autre côté du renfort fibreux 36, pour garantir une perforation complète de la peau supérieure. Dans ce cas pour le premier procédé de réalisation, on peut effectuer un arasement des extrémités des pointes 50 dépassant avant la fermeture du moule, ou introduire ces extrémités dans des logements prévus dans le couvercle du moule. Pour le deuxième procédé de fabrication l'extrémité des pointes 54 peut s'enfoncer dans le matériau de remplissage fugitif 30.

On notera que ces procédés de réalisation des perforations écartent les fibres lors de l'introduction des pointes 50, 54 sans les couper, ce qui ne dégrade pas la tenue mécanique de la peau ainsi perforée.

En variante on peut réaliser les perforations par tout autre procédé, comme un perçage mécanique, ou un perçage par rayon laser.

## Revendications

1. Procédé de fabrication d'un panneau d'atténuation acoustique comprenant deux peaux extérieures (4, 6) en matériau composite à matrice céramique contenant un renfort fibreux (34, 36), assemblées de chaque côté d'une âme centrale alvéolaire (2), ce procédé étant **caractérisé en ce qu'**il comporte :
- une étape de fabrication de l'âme centrale alvéolaire (2) par assemblage de lamelles d'aluminium,
- une étape de traitement électrochimique de l'âme centrale alvéolaire (2) de manière à convertir totalement l'aluminium en oxyde d'aluminium, de sorte que l'âme centrale alvéolaire (2) comporte des parois (10) formant des cavités acoustiques (12),
- une étape d'insertion dans les cavités acoustiques (12) d'un matériau de remplissage fugitif (30) laissant libre dans chaque cavité, de chaque côté contre la peau, un espace annulaire faisant le tour de cette cavité, et
- une étape de frittage du matériau composite céramique réalisant une élimination du matériau fugitif, avec un remplissage par le matériau composite des espaces autour des cavités.

2. Procédé de fabrication selon la revendication 1, **caractérisé en ce qu'**il comprend une étape supplémentaire destinée à réaliser, pendant l'étape de frittage, des perforations (8) de l'une des peaux en matériau composite (6).

3. Procédé de fabrication selon la revendication 2, **caractérisé en ce que** l'étape supplémentaire comporte la réalisation de pointes (50) sur le matériau de remplissage fugitif (30), dans ce même matériau, traversant un renfort fibreux (36) d'une peau.

4. Procédé de fabrication selon la revendication 2, **caractérisé en ce que** l'étape supplémentaire comporte la dépose sur le côté extérieur d'un renfort fibreux (36) prévu pour une peau, d'une plaque (52) équipée de pointes (54) traversant ce renfort.

5. Procédé de fabrication selon l'une quelconque des revendications précédentes, **caractérisé en ce qu'**il utilise pour réaliser les peaux (4, 6) des renforts fibreux secs recevant ensuite la matrice par filtration, ou des renforts fibreux pré-imprégnés d'une matrice.

6. Procédé de fabrication selon l'une quelconque des revendications précédentes, **caractérisé en ce qu'**il utilise pour le matériau de remplissage fugitif (30) un ou plusieurs matériaux choisis parmi les matières plastiques thermoplastiques et thermodurcissables.

7. Procédé de fabrication selon l'une quelconque des revendications précédentes, **caractérisé en ce que** la réalisation des cavités acoustiques (12) comporte une étape d'assemblage entre elles de lamelles d'aluminium au moyen d'un écrouissage, d'un sertissage, d'une soudure, ou d'un collage avec un adhésif précéramique.

8. Panneau d'atténuation acoustique en matériau composite céramique, **caractérisé en ce qu'**il est réalisé avec un procédé suivant l'une quelconque des revendications précédentes.

9. Panneau d'atténuation acoustique selon la revendication 8, **caractérisé en ce que** le raccordement du matériau composite céramique des peaux (4, 6) avec les parois (10) de l'âme centrale (2) forme sensiblement un rayon de raccordement (R - Fig.7) identique à un rayon de raccordement (R - Fig.6) du matériau de remplissage fugitif (30), le rayon de raccordement (R) du matériau de remplissage fugitif (30) faisant, pour chaque cavité (12), le contour de la cavité (12) de manière à laisser dans chaque côté de la cavité (12) un espace faisant son contour entre les parois (10) et un plan horizontal recevant une peau (4, 6).

10. Panneau d'atténuation acoustique selon la revendication 8 ou 9, **caractérisé en ce que** les deux peaux (4, 6) comprennent un renfort fibreux (34, 36) en oxyde métallique et une matrice en oxyde métallique.

11. Panneau d'atténuation acoustique selon l'une quelconque des revendications 8 à 10, **caractérisé en ce que** l'âme centrale (2) comporte des passages de drainage (20) entre des cavités (12).

12. Panneau d'atténuation acoustique selon l'une quelconque des revendications 8 à 11, **caractérisé en ce que** l'âme centrale (2) comporte sur ses côtés des créneaux (22) d'accrochage sur les peaux (6, 8).

13. Ensemble propulsif d'aéronef comportant un ou plusieurs panneaux d'atténuation acoustique conformes à l'une quelconque des revendications 8 à 12.

## Patentansprüche

1. Verfahren zum Herstellen eines Schalldämmpaneels, umfassend zwei Außenhäute (4, 6) aus Verbundwerkstoff mit Keramikmatrix, eine Faserverstärkung (34, 36) enthaltend, die beiderseits eines zellförmigen zentralen Kerns (2) zusammengefügt sind, wobei dieses Verfahren **dadurch gekennzeichnet ist, dass** es beinhaltet:
- einen Schritt zum Herstellen des zellförmigen zentralen Kerns (2) durch Zusammenfügen von Aluminiumlamellen,
- einen Schritt zum elektrochemischen Behandeln des zellförmigen zentralen Kerns (2), um das Aluminium vollständig in Aluminiumoxid umzuwandeln, sodass der zellförmige zentrale Kern (2) Wände (10) beinhaltet, welche Schallhohlräume (12) bilden,
- einen Schritt des Einführens in die Schallhohlräume (12) eines flüchtigen Füllwerkstoffes (30), welcher in jedem Hohlraum auf jeder Seite an der Haut einen ringförmigen Raum freilässt, der um diesen Hohlraum herumführt, und
- einen Schritt des Sinterns des keramischen Verbundwerkstoffes, welcher eine Eliminierung des flüchtigen Werkstoffes mit einer Füllung durch den Verbundwerkstoff der Räume um die Hohlräume herum realisiert.

2. Verfahren zum Herstellen nach Anspruch 1, **dadurch gekennzeichnet, dass** es einen zusätzlichen Schritt umfasst, der dazu bestimmt ist, während des Sinterschrittes Perforationen (8) der einen der Häute aus Verbundwerkstoff (6) zu realisieren.

3. Verfahren zum Herstellen nach Anspruch 2, **dadurch gekennzeichnet, dass** der zusätzliche Schritt das Realisieren von Spitzen (50) auf dem flüchtigen Füllwerkstoff (30) aus diesem selben Werkstoff beinhaltet, welche durch eine Faserverstärkung (36) einer Haut hindurchführen.

4. Verfahren zum Herstellen nach Anspruch 2, **dadurch gekennzeichnet, dass** der zusätzliche Schritt das Ablegen an der Außenseite einer Faserverstärkung (36), die für eine Haut vorgesehen ist, einer Platte (52) beinhaltet, die mit Spitzen (54) ausgestattet ist, welche durch diese Verstärkung hindurchführen.

5. Verfahren zum Herstellen nach einem der vorstehenden Ansprüche, **dadurch gekennzeichnet, dass** es zum Realisieren der Häute (4, 6) trockene Faserverstärkungen, die danach die Matrix durch Filtration empfangen, oder mit einer Matrix vorimprägnierte Faserverstärkungen verwendet.

6. Verfahren zum Herstellen nach einem der vorstehenden Ansprüche, **dadurch gekennzeichnet, dass** es für den flüchtigen Füllwerkstoff (30) einen oder mehrere Werkstoffe verwendet, die aus den thermoplastischen und hitzehärtbaren Kunststoffmaterialien ausgewählt werden.

7. Verfahren zum Herstellen nach einem der vorstehenden Ansprüche, **dadurch gekennzeichnet, dass** das Realisieren der Schallhohlräume (12) einen Schritt zum Zusammenfügen zwischen sich von Aluminiumlamellen anhand einer Kaltverfestigung, einer Crimpverbindung, einer Schweißnaht oder einer Verklebung mit einem vorkeramischen Kleber beinhaltet.

8. Schalldämmpaneel aus einem keramischen Verbundwerkstoff, **dadurch gekennzeichnet, dass** es mit einem Verfahren nach einem der vorstehenden Ansprüche realisiert wird.

9. Schalldämmpaneel nach Anspruch 8, **dadurch gekennzeichnet, dass** die Anbindung des keramischen Verbundwerkstoffes der Häute (4, 6) an die Wände (10) des zentralen Kerns (2) im Wesentlichen einen Anbindungsradius (R - Fig. 7) gleich einem Anbindungsradius (R - Fig. 6) des flüchtigen Füllwerkstoffs (30) bildet, wobei der Anbindungsradius (R) des flüchtigen Füllwerkstoffs (30) für jeden Hohlraum (12) die Kontur des Hohlraumes (12) macht, um auf jeder Seite des Hohlraumes (12) einen Raum zu lassen, der seine Kontur zwischen den Wänden (10) und einer horizontalen Ebene macht, welche eine Haut (4, 6) aufnimmt.

10. Schalldämmpaneel nach Anspruch 8 oder 9, **dadurch gekennzeichnet, dass** die beiden Häute (4, 6) eine Faserverstärkung (34, 36) aus Metalloxid und eine Matrix aus Metalloxid umfassen.

11. Schalldämmpaneel nach einem der Ansprüche 8 bis 10, **dadurch gekennzeichnet, dass** der zentrale Kern (2) Drainagedurchlässe (20) zwischen Hohlräumen (12) beinhaltet.

12. Schalldämmpaneel nach einem der Ansprüche 8 bis 11, **dadurch gekennzeichnet, dass** der zentrale Kern (2) an seinen Seiten Zinnen (22) zum Einrasten in die Häute (6, 8) beinhaltet.

13. Antriebseinheit für ein Luftfahrzeug, ein oder mehrere Schalldämmpaneele nach einem der Ansprüche 8 bis 12 beinhaltend.

## Claims

1. A method for manufacturing an acoustic attenuation panel comprising two external skins (4, 6) made of a ceramic matrix composite material containing a fibrous reinforcement (34, 36), assembled on each side of a cellular central core (2), this method being **characterized in that** it includes:
- a step of manufacturing the cellular central core (2) by assembling aluminum laminae,
- a step of electrochemically treating the cellular central core (2) so as to convert the aluminum completely into aluminum oxide, so that the cellular central core (2) includes walls (10) forming acoustic cavities (12),
- a step of inserting into the acoustic cavities (12) a fugitive filling material (30) leaving free in each cavity, on each side against the skin, an annular space surrounding this cavity, and
- a step of sintering the ceramic composite material achieving removal of the fugitive material, with a filling by the composite material of the spaces around the cavities.

2. The manufacturing method according to claim 1, **characterized in that** it comprises an additional step intended to make, during the sintering step, perforations (8) of one of the skins made of composite material (6).

3. The manufacturing method according to claim 2, **characterized in that** the additional step includes the making of spikes (50) on the fugitive filling material (30), in this same material, passing through a fibrous reinforcement (36) of a skin .

4. The manufacturing method according to claim 2, **characterized in that** the additional step includes the deposit on the external side of a fibrous reinforcement (36) provided for a skin, a plate (52) equipped with spikes (54) passing through this reinforcement.

5. The manufacturing method according to any one of the preceding claims, **characterized in that** it uses to make the skins (4, 6) dry fibrous reinforcements receiving, afterwards, the matrix by filtration, or fibrous reinforcements pre-impregnated with a matrix.

6. The manufacturing method according to any one of the preceding claims, **characterized in that** it uses for the fugitive filling material (30) one or several materials selected from thermoplastic and thermosetting plastic materials.

7. The manufacturing method according to any one of the preceding claims, **characterized in that** the making of the acoustic cavities (12) includes a step of assembling together aluminum laminae by means of cold-working, crimping, welding, or bonding with a pre-ceramic adhesive.

8. An acoustic attenuation panel made of a ceramic composite material, **characterized in that** it is made with a method according to any one of the preceding claims.

9. The acoustic attenuation panel according to claim 8, **characterized in that** the connection of the ceramic composite material of the skins (4, 6) with the walls (10) of the central core (2) substantially forms a connecting radius (R - Fig.7) identical to a connecting radius (R - Fig.6) of the fugitive filling material (30), the connecting radius (R) of the fugitive filling material (30), for each cavity (12), extending throughout the contour of the cavity (12) so as to leave in each side of the cavity (12) a space forming its contour between the walls (10) and a horizontal plane receiving a skin (4, 6).

10. The acoustic attenuation panel according to claim 8 or 9, **characterized in that** the two skins (4, 6) comprise a fibrous reinforcement (34, 36) of metal oxide and a matrix of metal oxide.

11. The acoustic attenuation panel according to any one of claims 8 to 10, **characterized in that** the central core (2) includes drain passages (20) between cavities (12).

12. The acoustic attenuation panel according to any one of claims 8 to 11, **characterized in that** the central core (2) includes on its sides crenellations (22) for hooking on the skins (6, 8).

13. A propulsion unit of an aircraft including one or several acoustic attenuation panel(s) in accordance with any one of claims 8 to 12.
